Europäisches Patentamt

European Patent Office     (11) Publication number:    **0 090 385**
                                                          A2
Office européen des brevets

(19)

(12)                    **EUROPEAN PATENT APPLICATION**

(21) Application number: 83103020.0            (51) Int. Cl.³: **G 06 F 9/36**

(22) Date of filing: 26.03.83

(30) Priority: **31.03.82 US 363970**

(43) Date of publication of application: **05.10.83**
     **Bulletin 83/40**

(84) Designated Contracting States: **DE FR GB IT NL SE**

(71) Applicant: **GENERAL ELECTRIC COMPANY, 1 River Road, Schenectady New York 12305 (US)**

(72) Inventor: **Beall, Donald Lee, 7644 Anne Terrace, North Syracuse New York 13212 (US)**
     Inventor: **Tomlinson, Harold Woodruff, Jr., 4020 Bay Park Drive, Liverpool New York 13088 (US)**

(74) Representative: **Catherine, Alain, GETSCO 42, avenue Montaigne, F-75008 Paris (FR)**

(54) Method and apparatus for controllable indexed memory addressing in a data processing system.

(57) Method and apparatus is disclosed for loading the content of a data memory address register with a selected portion of a data word as it is being read from that same memory such that, during the next memory access cycle, an indexed jump may be made to a desired memory location other than the next successive location in the data memory.

1

METHOD AND APPARATUS FOR CONTROLLABLE INDEXED
MEMORY ADDRESSING IN A DATA PROCESSING SYSTEM

This invention is generally related to method and apparatus for accessing desired locations of a data memory in a digital data processing system. Special indexing or "jumping" ability is provided with respect to the address register of the data memory by providing a digital feedback loop from the output of the data memory to the address register.

Conventional digital data processing systems have long included the capability of indexing the instruction address register. That is, while the instruction address register is normally connected so as to count its way through successive locations of an instruction memory space after being initially started at some desired location, circuitry is normally included to permit the indexing or "jumping" of the instruction address register contents to some abruptly different location in the instruction memory space so as to begin a new subroutine, etc.

Normally, access to the data memory space of a digital data processing system is made through a data address register/counter that may be loaded, under appropriate program instruction control, with any then "known" desired data memory space location and, in the next subsequent data memory access cycle, the contents of that location in the data memory space will be read out and made available to the data processor (for example, on a data bus) for any desired use.

One of the simplest ways of storing and retrieving data from the data memory space is to use a sequential ordering within that space of the data items that are to be stored and retrieved. In this way, the address register/counter can simply be incremented at successive memory access cycles so as to step its way through the data memory space. However, as is also known in the prior art, it is often more advantageous to use a "linked" addressing scheme where the stored data records include sufficient data to identify the address of the "next" record in the memory space which may or may not be the next successive physical location in the memory space. Both singly linked data records and doubly linked data records (i.e., where each data record includes address information linking it to both its just previous data record and to its next successive data record) are well known in the prior art.

However, so far as is presently known, the normal processing of such address linked records in memory space has required multiple data processing instruction cycles to progress from one record to the next in such a linked data memory space. That is, on a given memory access cycle, the actual data record and its accompanying address links to other data records are read out of the memory and made available to the processor. Thereafter, the conventional data processing system must perform one or more subsequent data processing tasks to decide which portion, if any, of the data memory contents should be re-routed back to the data address register so that the "next" record in the data memory space can be accessed.

The present invention provides a dedicated hardware feedback connection directly between the output of the data memory and the address register therefor such that, if desired, a portion of the data record accessed in a given data memory access cycle may be immediately transferred to

3

the address register so that the "next" data record is a linked list, for example, can be immediately accessed on the very next memory access cycle. This feature is especially useful for processing linked lists of data as explained in more detail in our co-pending related application reference above.

In the exemplary embodiment, a multiplexer is included in the feedback loop from the output of the data memory to its address register so as to increase the overall data processing flexibility that may be realized using this invention.

These and other objects and advantages of this invention will be better understood and appreciated by reading the following detailed description of the presently preferred exemplary embodiment of this invention taken in conjunction with the accompanying drawings, of which :

FIGURE 1 is a general block diagram of an exemplary embodiment of this invention; and

FIGURES 2 and 3 illustrate one possible application of this invention.

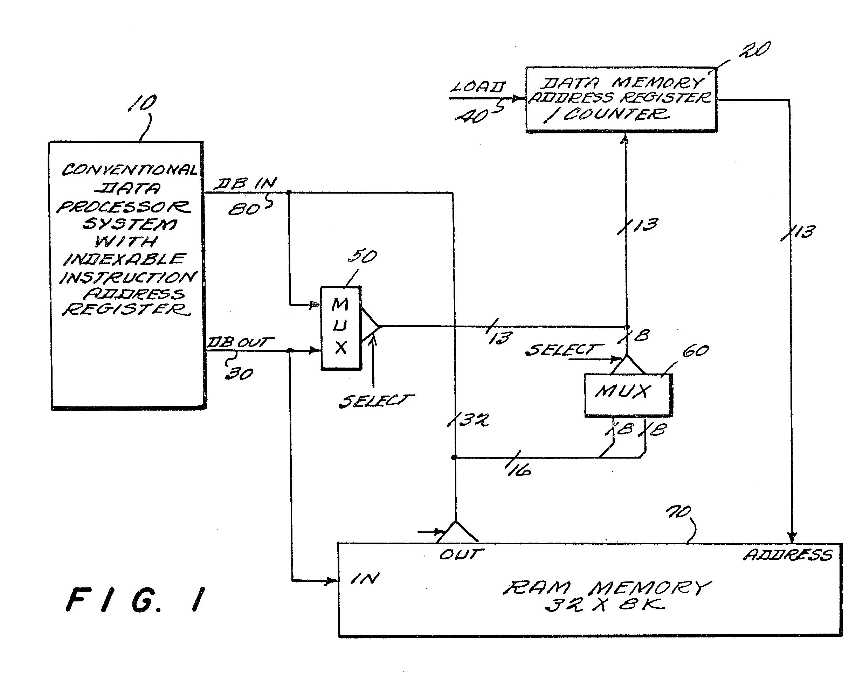

The conventional data processing system 10 shown in FIGURE 1 is of conventional architecture including indexable instruction address registers and the like and should be familiar to those knowledgeable in the art of designing digital data processing systems. Traditionally, the data memory address register/counter 20 is loaded via the output data bus 30 of the conventional data processing system (which also produces a conventional "load" signal at 40 when it is desired to actually load the address register 20). As will appreciated, other conventional provisions may also be made for incrementing the address register in a counting fashion if desired.

However, in the exemplary embodiment of FIGURE 1, additional direct data feedback paths for loading the contents of the address register 20 are provided by the multiplexer 50

4

and multiplexer 60. It will be observed that either or both of these multiplexers may be selected to form part of a direct feedback connection from the output of the data memory 70 to the input of the address register 20. This provides for great flexibility in filling the contents of the address register 20 during the very same instruction cycle that the data memory 70 is being read.

In the example shown at FIGURE 1, only 8 of the 32 output bit lines from the data memory 70 are selected by multiplexer 60 for filling the 12 bit address register 20. The other 5 bits may be left intact as the previous content of the address register 20 so as to simply index within a selected portion of the data memory space. Alternatively, the other 5 bits of the address may be supplied by the data memory output via multiplexer 50 and/or from the data bus 30, etc. All 32 bits are available to the data processing system 10 via data bus 80. Of course, more or less than the 8 bit lines shown in FIGURE 1 could be passed directly from the output of the data memory 70 to the address register 20 via multiplexer 60 and/or 50 if desired.

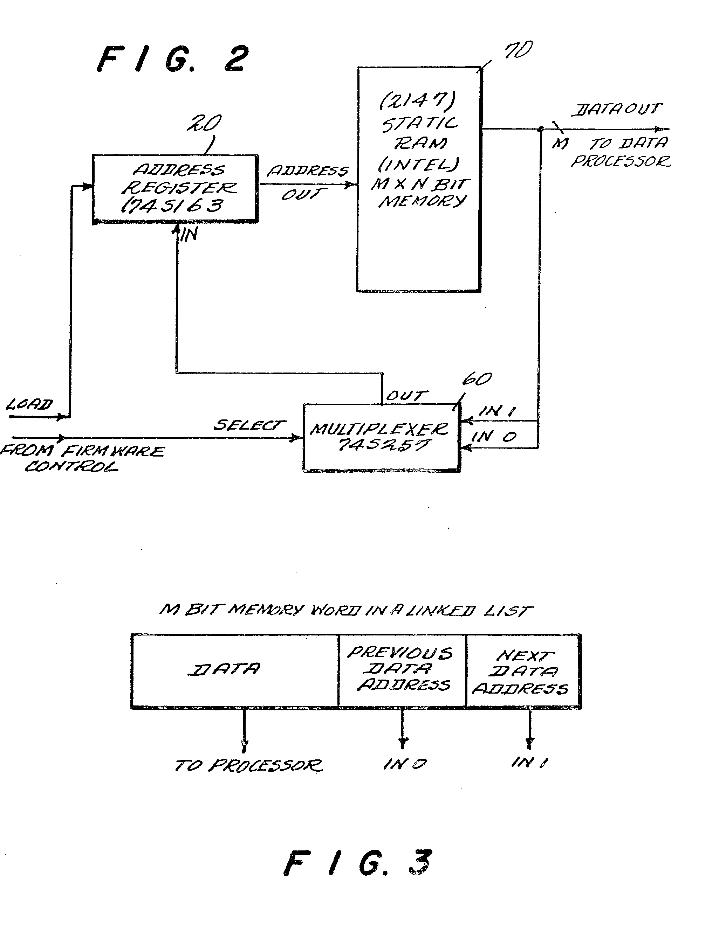

A portion of the system shown in FIGURE 1 is redrawn at FIGURE 2 so as to illustrate one possible application of this system with the M bit memory word in a linked list having a format as shown in FIGURE 3. Here, each M bit word in the data memory 70 comprises the actual data which is to be output to the data processor as well as the address of the previous data word denoted as a subset "IN 0" of the M bit memory word and a similar subset denoting the address of the next data word denoted·by "IN 1" in FIGURE 3. The IN 0 and IN 1 subsets of the M bit output from memory 70 are connected to two different input ports of multiplex 60 as shown in FIGURE 2. Then, under firmware control, for example, one of these two input ports may be selected from the multiplex 60 and immediately loaded into the address register 20 during a given data access cycle.Accordingly, a doubly linked list of data memory words as shown in FIGURE 3 can be immediately accessed in a either direction during successive memory access cycles.

This invention thus provides method and apparatus for updating the contents of a digital data memory address register based upon the currently read contents of the same digital memory. When used under firmware control, for example, the invention provides an indexed address capability for the memory without requiring use of the data processor's facilities in additional instruction cycles. That is, the average access time for such indexed data in the data memory is reduced because the data processor itself is not required to compute and update the contents of the memory address register before the next data word can be retrieved. Where data processing of such linked lists of data words is required, this ability can greatly enhance the speed with which such data lists can be processed. With this invention, the reading of data from a data memory and the arbitrary modification of the memory address to be used for accessing the memory during the next memory access cycle are simultaneously achieved during one instruction cycle time.

Although a multiplexer is preferably included in the feedback loop from the output of the data memory to the address register, it should be appreciated that such a multiplexer is not absolutely necessary since, for some specialized applications, it may be desirable to hardwire certain bits from the output of the data memory directly to the address register. However, provision of one or more multiplexers in the feedback path(s) greatly enhances the flexibility of the data memory access system provided by this invention.

Although only one exemplary embodiment of this invention has been described in detail above, those in the art will recognize that many possible variations and modifications of this embodiment may be made without departing from the novel and advantageous features of this invention.

Accordingly, all such modifications and variations are intended to be included within the scope of the following appended claims.

C L A I M S

1. In a data processing system adapted to have digital program instructions stored in a first digital memory means and digital data stored in a second memory means, apparatus for controlled non-sequential data access to said digital data memory means, said apparatus comprising :

a memory address register for temporarily storing supplied digital memory address signals therein;

said second digital memory means being connected to provide digital data output signals previously stored at storage locations therein identified by the contents of said memory address register; and

digital feedback means having an output connected to supply at least some of said digital memory address signals to said memory address register from the digital data output signals provided bay said memory means.

2. Apparatus as in claim 1 wherein said second digital memory means is capable of providing another set of said digital data output signals during a predetermined memory access cycle time and wherein said digital address feedback means is connected to supply said digital memory address signals to said memory address register during a given memory access cycle time such that the digital data output signals provided during one memory access cycle time are taken from storage locations determined, at least in part, by the digital data output signals produced during the just-previous memory access cycle.

3. Apparatus as in claim 1 or 2 wherein said digital feedback means comprises :

digital multiplex means having (1) a set of output terminals connected to supply at least some of said digital memory address signals to the memory address register, (2) a first set of input terminals connected to receive a first predetermined subset of the digital data output signals provided by said memory means, and (3) a second set of input

8

terminals connected to receive a second predetermined subset of the digital data output signals provided by said memory means;

said digital multiplex means also having a selection input terminal for receiving a control signal to determine which one of said predetermined subsets of digital output signals is provided via its output to said memory address register.

4. In a data processing system adapted to have digital program instructions stored in a first digital memory means and digital data stored in a second memory means, method for controlled non-sequential data access to said digital data memory means, said method comprising :

temporarily storing supplied digital memory address signals;

providing digital data output signals previously stored at storage locations in said second digital memory means identified by the contents of a memory address register; and

supplying at least some of said digital memory address signals to said memory address register from the digital data output signals provided by said memory means.

5. Method as in claim 4 wherein said providing step includes providing another set of said digital data output signals during a predetermined memory access cycle time and supplying said digital memory address signals to said memory address register during a given memory access cycle time such that the digital data output signals provided during one memory access cycle time are taken from storage locations determined, at least in part, by the digital data output signals produced during the just-previous memory access cycle.

6. Method as in claim 4 or 5 wherein said supplying step comprises :

supplying at least some of said digital memory address signals to the memory address register, which signals

9

are selected from : (1) a first predetermined subset of the digital data output signals provided by said memory means, and (2) a second predetermined subset of the digital data output signals provided by said memory means.

F I G. I

# F I G. 2

# F I G. 3

M BIT MEMORY WORD IN A LINKED LIST